# FASCICULE DE BREVET EUROPEEN

(11) **EP 4 423 427 B1**
(45) Date de publication et mention de la délivrance du brevet: **25.11.2026**
(21) Numéro de dépôt: 22809459.5
(22) Date de dépôt: 27.10.2022
(51) Int. Cl.: F21S 43/14, F21S 43/237, F21S 43/247, F21S 43/27, G02B 6/36, B60Q 1/00, B60Q 1/26, F16B 9/00, G02B 6/38, F21V 8/00, G02B 6/42, F16B 9/02, F16B 21/20, F16B 11/00, F16B 21/08, F21S 43/19, F21S 45/47, F21S 45/50

(54) **DISPOSITIF DE FIXATION D'UN GUIDE DE LUMIÈRE POUR VÉHICULE**
VORRICHTUNG ZUR BEFESTIGUNG EINES LICHTWELLENLEITERS FÜR EIN FAHRZEUG
DEVICE FOR ATTACHING A LIGHT GUIDE FOR A VEHICLE

(30) Priorité: 29.10.2021 FR 2111526
(43) Date de publication de la demande: 04.09.2024
(73) Titulaire: Valeo Vision, 93012 Bobigny Cedex (FR)
(72) Inventeur: DELANDE, Benoit, 93012 Bobigny cedex (FR); LOZANO, Anthony, 93012 Bobigny (FR); FRANC, Alexandre, 7822 Meslin l-Eveque (BE)
(74) Mandataire: Valeo Visibility
(86) Numéro de dépôt international: PCT/EP2022/080155
(87) Numéro de publication internationale: WO 2023/073147

(56) Documents cités:
- EP-A2- 0 177 937
- EP-A2- 0 971 251
- CN-U- 202 158 471
- FR-A1- 2 979 399
- FR-A1- 3 087 169
- US-A- 2 321 157
- US-A- 6 167 184
- US-A1- 2017 122 532

## Description

La présente invention se rapporte à un dispositif de fixation d'un guide de lumière pour véhicule. Elle trouve une application particulière mais non limitative dans les véhicules automobiles.

Les documents EP 0971251 A2, FR 2979399 A1, US 2321157 A, EP 0177937 A2 sont représentatifs de l'art antérieur.

Un exemple connu de l'homme du métier de dispositif de fixation d'un guide de lumière pour véhicule est un bouterollage sur un support d'un module lumineux ce qui permet de fixer le guide de lumière de façon définitive au module lumineux. Le module lumineux comprend un générateur de lumière avec une source lumineuse qui émet de la lumière qui va traverser le guide de lumière.

Un inconvénient de cet état de la technique est qu'il n'est pas possible de remplacer le module lumineux si celui-ci est défectueux à moins de casser le bouterollage et de remplacer tout l'ensemble module lumineux et guide de lumière.

Dans ce contexte, la présente invention vise à proposer un dispositif de fixation qui permet de résoudre l'inconvénient mentionné.

A cet effet, l'invention propose un dispositif de fixation d'un guide de lumière pour véhicule, ledit dispositif de fixation étant conforme à la revendication 1.

Ainsi, comme on va le voir en détails par la suite, le guide de lumière va pouvoir s'insérer dans la première pièce et pouvoir également être retiré de la première pièce par une simple pression sur la deuxième pièce, la pression permettant à la première pièce d'agripper ou de relâcher le guide de lumière. Ainsi, le module lumineux est facilement remplaçable s'il est défectueux sans être obligé de remplacer le guide de lumière.

Selon des modes de réalisation non limitatifs, ledit dispositif de fixation peut comporter en outre une ou plusieurs caractéristiques supplémentaires prises seules ou selon toutes les combinaisons techniquement possibles, parmi les suivantes.

Selon un mode de réalisation non limitatif, ladite deuxième pièce est configurée pour pouvoir exercer une force sur lesdites languettes de sorte à positionner la première pièce dans la position ouverte.

Selon un mode de réalisation non limitatif, lesdites languettes possèdent des extrémités distales qui sont disposées sur un cercle plus ou moins grand selon respectivement la position ouverte ou la position fermée de ladite première pièce.

Selon un mode de réalisation non limitatif, au moins une partie de ladite cavité est formée par ledit corps creux cylindrique.

Selon un mode de réalisation non limitatif, ladite deuxième pièce comprend :
- un corps cylindrique creux dans lequel ledit guide de lumière peut être inséré,
- une partie conique configurée pour appuyer sur lesdites languettes de ladite première pièce pour la mettre en position ouverte.

Selon un mode de réalisation non limitatif, ladite deuxième pièce comprend en outre une collerette externe disposée sur une extrémité de son corps cylindrique opposée à ladite partie conique sur laquelle une pression externe peut être exercée.

Selon un mode de réalisation non limitatif, ledit corps cylindrique creux de ladite deuxième pièce est composé d'au moins deux parties longitudinales séparées par un espace.

Selon un mode de réalisation non limitatif, ladite première pièce comprend en outre des languettes anti-retour configurées pour coopérer avec ladite partie conique de ladite deuxième pièce de sorte à maintenir ladite deuxième pièce à l'intérieur de la cavité.

Selon un mode de réalisation non limitatif, ledit corps cylindrique creux de ladite deuxième pièce est configuré pour dépasser du corps cylindrique creux de ladite première pièce lorsque ladite deuxième pièce est logée dans la cavité de ladite première pièce.

Il est en outre proposé un ensemble pour véhicule, ledit ensemble comprenant un guide de lumière et un dispositif de fixation selon l'une quelconque des caractéristiques précédentes, ledit guide de lumière étant fixé par ledit guide de fixation.

Selon des modes de réalisation non limitatifs, ledit ensemble pour véhicule peut comporter en outre une ou plusieurs caractéristiques supplémentaires prises seules ou selon toutes les combinaisons techniquement possibles, parmi les suivantes.

Selon un mode de réalisation non limitatif, ledit guide de lumière est un guide de lumière ou composé de fibres de verre ou de fibres optiques. Par guide de lumière on comprend dans la présente demande une pièce optique apte à guider de la lumière par réflexions internes totales successive de cette lumière, depuis une zone d'entrée vers une zone de sortie. Il peut s'agir notamment d'un élément tubulaire. La section dudit élément tubulaire peut présenter un contour ayant diverses formes, par exemple et de manière non limitative, circulaire, carrée, rectangulaire, triangulaire, ou encore un assemblage de portions courbes et/ou rectilignes. Ladite section peut par ailleurs varier en taille et/ou en forme le long du profil longitudinal dudit guide de lumière.

Selon un mode de réalisation non limitatif, ladite première pièce comprend des languettes configurées pour que ladite première pièce soit en position fermée lorsqu'elles sont relâchées.

Selon un mode de réalisation non limitatif, ladite deuxième pièce est configurée pour pouvoir exercer une force sur lesdites languettes de sorte à positionner la première pièce dans la position ouverte.

Selon un mode de réalisation non limitatif, lesdites languettes possèdent des extrémités distales qui sont disposées sur un cercle plus ou moins grand selon respectivement la position ouverte ou la position fermée de ladite première pièce.

Selon un mode de réalisation non limitatif, ladite première pièce est une pièce périphérique avec une cavité dans laquelle vient se loger ladite deuxième pièce.

Selon un mode de réalisation non limitatif, ladite première pièce comprend un corps cylindrique creux et lesdites languettes sont situées à une première extrémité dudit corps cylindrique creux et disposées selon un cône sur la périphérie dudit corps cylindrique creux.

Selon un mode de réalisation non limitatif, ladite deuxième pièce comprend :
- un corps cylindrique creux dans lequel ledit guide de lumière peut être inséré,
- une partie conique configurée pour appuyer sur lesdites languettes de ladite première pièce pour la mettre en position ouverte.

Selon un mode de réalisation non limitatif, ladite deuxième pièce comprend en outre une collerette externe disposée sur une extrémité de son corps cylindrique opposée à ladite partie conique sur laquelle une pression externe peut être exercée.

Selon un mode de réalisation non limitatif, ledit corps cylindrique creux de ladite deuxième pièce est composé d'au moins deux parties longitudinales séparées par un espace.

Selon un mode de réalisation non limitatif, ladite première pièce comprend en outre des languettes anti-retour configurées pour coopérer avec ladite partie conique de ladite deuxième pièce de sorte à maintenir ladite deuxième pièce à l'intérieur de la cavité.

Selon un mode de réalisation non limitatif, ledit corps cylindrique creux de ladite deuxième pièce est configuré pour dépasser du corps cylindrique creux de ladite première pièce lorsque ladite deuxième pièce est logée dans la cavité de ladite première pièce.

Il est en outre proposé un module lumineux comprenant :
- un dispositif de fixation d'un guide de lumière pour véhicule selon l'une quelconque des caractéristiques précédentes,
- un générateur de lumière configuré pour coopérer avec ledit guide de lumière comprenant un boîtier.

Selon un mode de réalisation non limitatif, ladite première pièce est venue de matière avec ledit boîtier.

L'invention et ses différentes applications seront mieux comprises à la lecture de la description qui suit et à l'examen des figures qui l'accompagnent :
[Fig. 1] est une vue en perspective éclatée d'un dispositif de fixation d'un guide de lumière pour véhicule, ledit dispositif de fixation comprenant une première partie et une deuxième partie, selon un premier mode de réalisation non limitatif de l'invention,
[Fig. 2] est une vue en perspective assemblée du dispositif de fixation de la figure 1, selon un mode de réalisation non limitatif,
[Fig. 3] est une vue en coupe transversale dudit dispositif de fixation de la figure 2, selon un mode de réalisation non limitatif,
[Fig. 4] est une vue en perspective assemblée du dispositif de fixation de la figure 1 qui coopère avec un guide de lumière, selon un mode de réalisation non limitatif,
[Fig. 5] est une vue en coupe transversale dudit dispositif de fixation de la figure 2, selon un mode de réalisation non limitatif,
[Fig. 6] est une vue zoomée en perspective de la première pièce dudit dispositif de fixation de la figure 1 lorsqu'elle est dans une position fermée et qu'elle agrippe un guide de lumière, selon un mode de réalisation non limitatif,
[Fig. 7] est une vue zoomée de dessous de la première pièce de la figure 6, lorsqu'elle dans une position fermée, selon un mode de réalisation non limitatif,
[Fig. 8] est une vue zoomée de dessous de la première pièce de la figure 6, lorsqu'elle dans une position ouverte, selon un mode de réalisation non limitatif,
[Fig. 9] est une vue zoomée en perspective de la deuxième pièce dudit dispositif de fixation de la figure 1, selon un mode de réalisation non limitatif,
[Fig. 10] est une vue en perspective d'un module lumineux comprenant un générateur de lumière, ledit dispositif de fixation de la figure 1, ledit générateur de lumière comprenant un boîtier, une source lumineuse, un support électronique scellé, un radiateur, et un connecteur électrique, selon un mode de réalisation non limitatif,
[Fig. 11] est une vue en perspective dudit module lumineux de la figure 10 sans le boîtier dudit générateur de lumière, selon un mode de réalisation non limitatif,
[Fig. 12] est une vue en perspective dudit module lumineux de la figure 11 avec ledit support électronique non scellé, selon un mode de réalisation non limitatif,
[Fig. 13] est une vue en perspective dudit module lumineux de la figure 12, sans le radiateur du générateur de lumière, selon un mode de réalisation non limitatif,
[Fig. 14] est une vue en coupe du module lumineux de la figure 10, selon un mode de réalisation non limitatif,
[Fig. 15] est une vue en perspective arrière d'une partie d'une face avant d'un véhicule avec une calandre dans laquelle est intégré ledit module lumineux de la figure 10, un guide de lumière, le véhicule intégrant un jonc chromé et une glace de sortie qui s'étendent le long de ladite calandre, selon un mode de réalisation non limitatif,
[Fig. 16] est une vue zoomée en perspective de côté d'une partie de la face avant du véhicule de la figure 15 avec la calandre qui intègre le module lumineux de la figure 10, un guide de lumière, le jonc chromé et la glace de sortie, selon un mode de réalisation non limitatif,
[Fig. 17] est une vue zoomée en perspective avant de la face avant du véhicule de la figure 16 avec la calandre qui intègre le module lumineux de la figure 10, un guide de lumière, le jonc chromé et la glace de sortie selon un mode de réalisation non limitatif,
[Fig. 18] est une vue zoomée en perspective du module lumineux avec le guide de lumière, le jonc chromé et la glace de sortie sans la calandre de la figure 17, selon un mode de réalisation non limitatif,
[Fig. 19] est une vue zoomée en perspective du module lumineux avec le guide de lumière, la glace de sortie sans le jonc chromé de la figure 18, selon un mode de réalisation non limitatif,
[Fig. 20] est une vue zoomée en coupe du guide de lumière de la figure 19 qui est inséré dans la glace de sortie de la figure 19, selon un mode de réalisation non limitatif,
[Fig. 21] est une vue en perspective d'une partie du guide de lumière de la figure 19 qui est inséré dans la glace de sortie de la figure 19, selon un mode de réalisation non limitatif,
[Fig. 22] est une vue en perspective arrière du guide de lumière des figures 16 à 20 qui coopère avec le module lumineux des figures 16 à 19, ledit guide de lumière coopérant également avec un autre module lumineux, selon un mode de réalisation non limitatif,
[Fig. 23] est une vue en perspective de dessus d'une calandre et d'un pare-choc d'un véhicule intégrant deux modules lumineux qui coopèrent avec le guide de lumière des figures 16 à 20, selon un mode de réalisation non limitatif,
[Fig. 24] est une vue zoomée en perspective arrière de la calandre de la figure 23 sans le pare-choc, selon un mode de réalisation non limitatif,
[Fig. 25] est une vue en perspective éclatée d'un dispositif de fixation d'un guide de lumière pour véhicule, ledit dispositif de fixation comprenant une première partie et une deuxième partie, selon un deuxième mode de réalisation non conforme à l'invention et illustré également dans les Fig. 26-36,
[Fig. 26] est une vue zoomée en perspective de la première pièce dudit dispositif de fixation de la figure 25 lorsqu'elle est dans une position fermée, selon un mode de réalisation non limitatif,
[Fig. 27] est une vue zoomée de dessous de la première pièce de la figure 25, lorsqu'elle est dans une position fermée, selon un mode de réalisation non limitatif,
[Fig. 28] est une vue zoomée de dessous de la première pièce de la figure 25, lorsqu'elle dans une position ouverte, selon un mode de réalisation non limitatif,
[Fig. 29] est une vue zoomée de dessous de la deuxième pièce dudit dispositif de fixation de la figure 25, selon un mode de réalisation non limitatif,
[Fig. 30] est une vue zoomée en perspective de la deuxième pièce dudit dispositif de fixation de la figure 25, selon un mode de réalisation non limitatif,
[Fig. 31] est une vue en perspective d'un module lumineux comprenant un générateur de lumière, ledit dispositif de fixation de la figure 25, et un guide de lumière, ledit générateur de lumière comprenant un boîtier, une source lumineuse, un support électronique scellé, un radiateur, et un connecteur électrique, selon un mode de réalisation non limitatif,
[Fig. 32] est une vue en coupe dudit module lumineux de la figure 31, selon un mode de réalisation non limitatif,
[Fig. 33] est une vue de dessus du boîtier du générateur de lumière dudit module lumineux de la figure 30, avec la première pièce du dispositif de fixation de la figure 31, selon un mode de réalisation non limitatif,
[Fig. 34] est une vue en perspective dudit module lumineux de la figure 31, sans le guide de lumière, sans le boîtier du générateur de lumière, avec un support électronique non scellé, selon un mode de réalisation non limitatif,
[Fig. 35] est une vue en perspective du générateur de lumière dudit module lumineux de la figure 31, selon un mode de réalisation non limitatif,
[Fig. 36] est une vue en coupe d'une partie cylindrique du générateur de lumière dudit module lumineux de la figure 31, selon un mode de réalisation non limitatif.

Les éléments identiques, par structure ou par fonction, apparaissant sur différentes figures conservent, sauf précision contraire, les mêmes références.

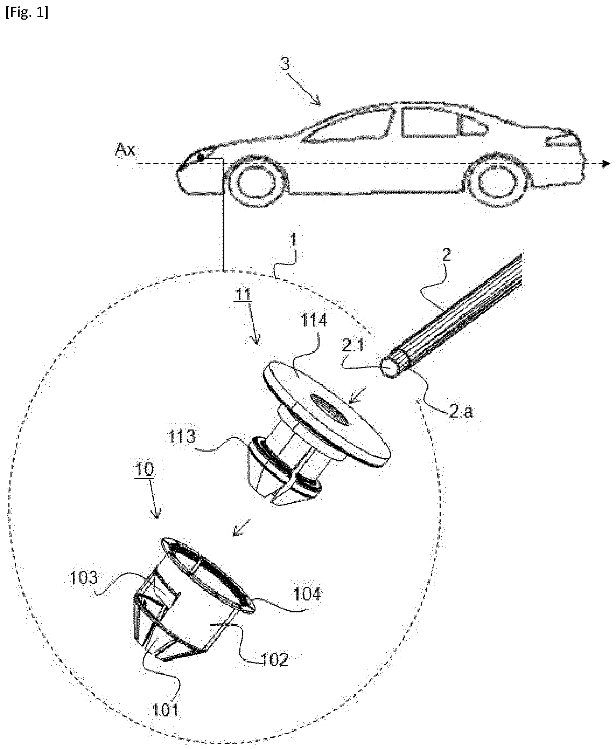

Le dispositif de fixation 1 d'un guide de lumière 2 pour véhicule 3 selon l'invention est décrit en référence aux figures 1 à 36. Dans un mode de réalisation non limitatif, le véhicule 3 est un véhicule automobile. Par véhicule automobile, on entend tout type de véhicule motorisé. Ce mode de réalisation est pris comme exemple non limitatif dans la suite de la description. Dans la suite de la description, le véhicule 3 est ainsi autrement appelé véhicule automobile 3.

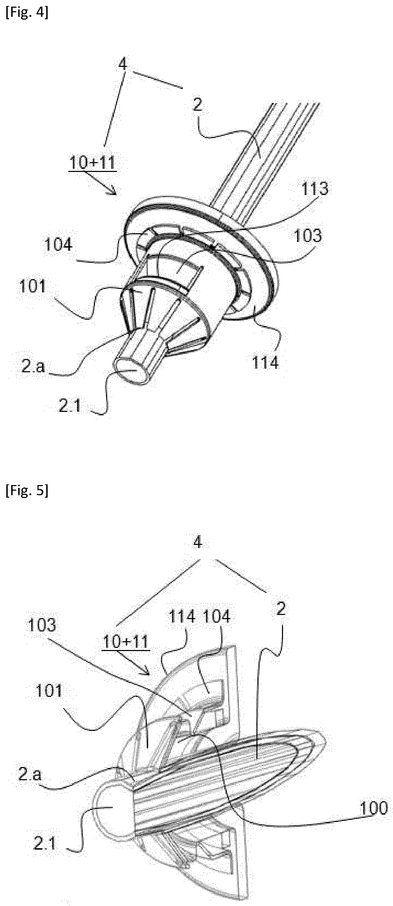

Le dispositif de fixation 1 coopère ainsi avec le guide de lumière 2 et fait partie d'un ensemble 4 comprenant ledit guide de lumière 2 tel qu'illustré sur les figures 4 et 5 ou la figure 25.

Dans des modes de réalisation non limitatifs, le guide de lumière 2 est :
- un guide de lumière, ou
- composé de fibres de verre, ou,
- un ensemble de fibres de optique, ledit ensemble comprenant soit une seul fibre optique encapsulée dans une gaine, ou un bouquet de plusieurs fibres optiques encapsulées dans une gaine.

Dans un mode de réalisation non limitatif, le guide de lumière est également gainé à l'exception de son extrémité qui est une zone de fixation pour le fixer.

Dans un mode de réalisation non limitatif, la ou les fibres optiques sont en plastique transparent. Dans un mode de réalisation non limitatif, les fibres de verre sont surmoulées à une extrémité dans du plastique ou collée ensemble avec une colle à une extrémité.

Tel qu'illustré sur les figures 1 à 3, et la figure 5, le dispositif de fixation 1 comprend :
- une première pièce 10,
- une deuxième pièce 11.

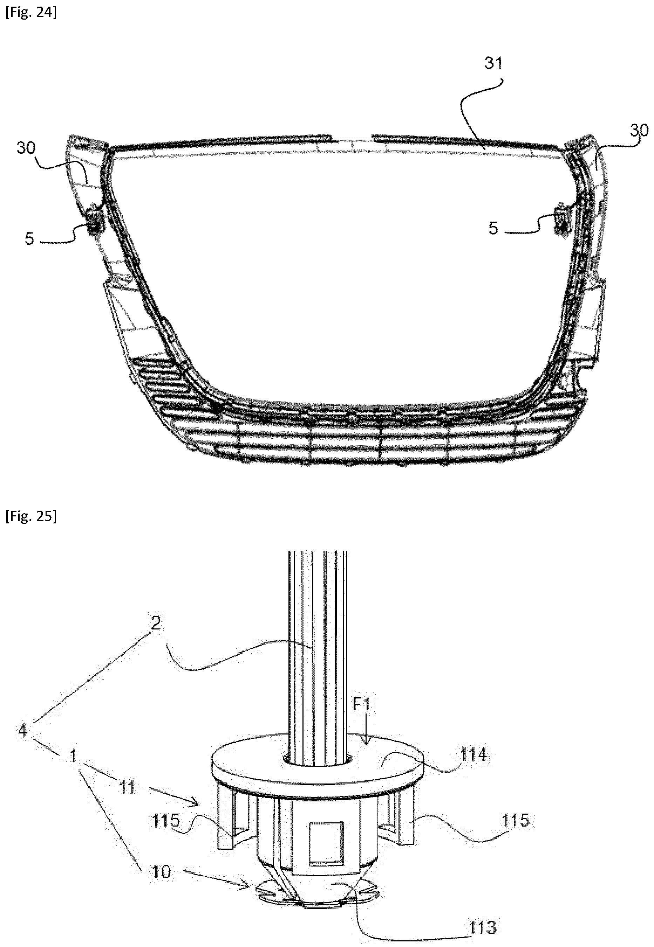

Le dispositif de fixation 1 permet de fixer un guide de lumière 2 tel qu'illustré sur la figure 4 et la figure 5 en coupe, ou sur la figure 25. Tel qu'illustré sur les figures 4, 5 et 25 le guide de lumière 2 comprend une extrémité 2.a qui dépasse du dispositif de fixation 1 lorsqu'il est logé dedans et une entrée 2.1 qui par laquelle de la lumière émise par une source lumineuse 502 (décrite plus loin) va pouvoir entrer. L'entrée 2.1 se trouve à l'extrémité 2.a.

Le dispositif de fixation 1 est décrit selon un premier mode de réalisation non limitatif illustré sur les figures 1 à 24 et selon un deuxième mode de réalisation non limitatif illustré sur les figures 25 à 36.

Le premier mode de réalisation du dispositif de fixation 1 est décrit ci-après en référence aux figures 1 à 24.

La première pièce 10 du dispositif de fixation 1 est décrite ci-après.

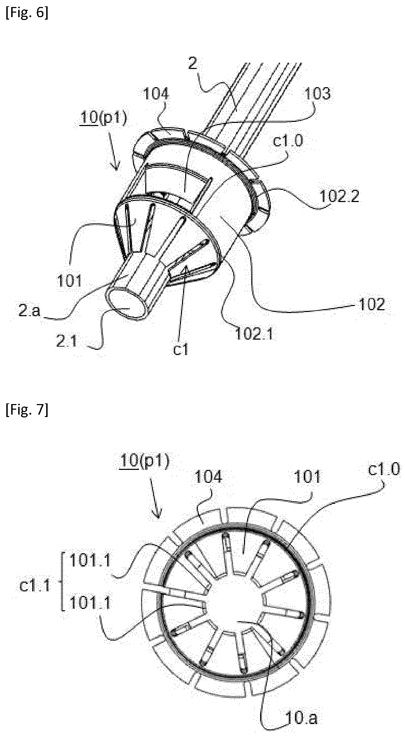

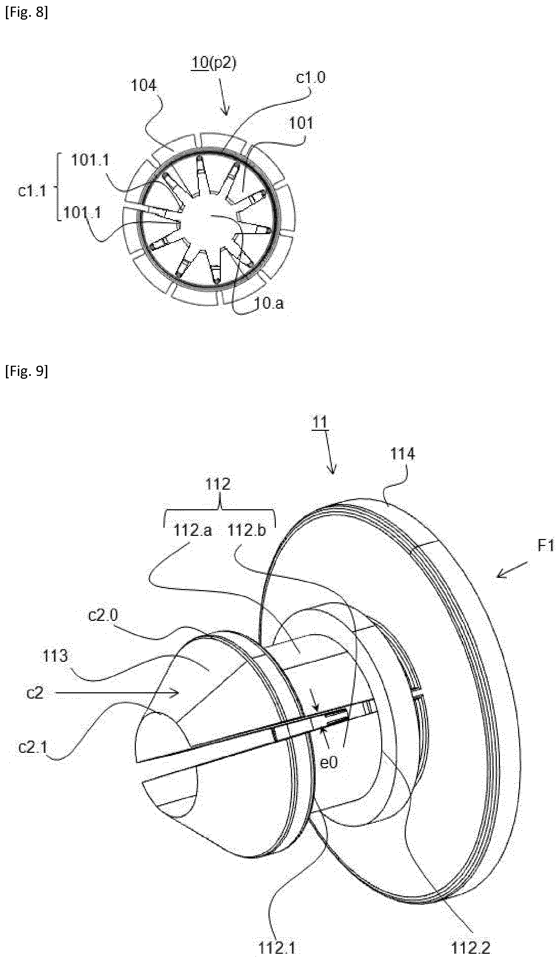

La première pièce 10 est configurée pour prendre :
- une position fermée p1 (illustrée sur les figures 6 et 7) dans laquelle elle agrippe le guide de lumière 2 ce qui permet de fixer le guide de lumière 2,
- une position ouverte p2 (illustrée sur la figure 8) dans laquelle elle n'agrippe pas le guide de lumière 2 ce qui permet d'insérer ou de détacher le guide de lumière 2 du dispositif de fixation 1.

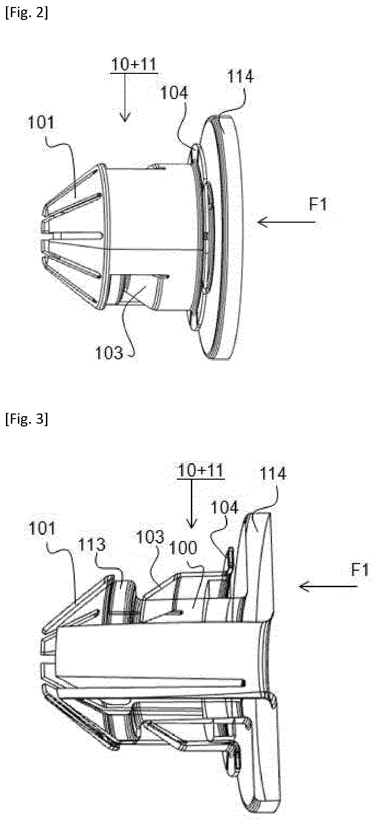

Tel qu'illustré sur la figure 2 et la figure 3, dans un mode de réalisation non limitatif, la première pièce 10 est une pièce périphérique avec une cavité 100 (illustrée sur les figures 3 et 5) dans laquelle vient se loger la deuxième pièce 11 tel qu'illustré sur les figures 2 et 3.

Dans un mode de réalisation non limitatif illustrées sur les figures 2 à 8, la première pièce 10 comprend des languettes 101 configurées pour que ladite première pièce 10 soit :
- en position fermée p1 lorsqu'elles sont relâchées,
- en position ouverte p2 lorsqu'une pression F1 est exercée sur elles.

Dans un mode de réalisation non limitatif, la première pièce 10 est réalisée dans un matériau métallique ou plastique qui permet d'apporter de l'élasticité aux languettes 101 et assurer ainsi l'accrochage du guide de lumière 2.

Tel qu'illustré sur la figure 6, dans un mode de réalisation non limitatif, la première pièce 10 comprend en outre un corps cylindrique creux 102, autrement appelé corps cylindrique 102 dans la suite de la description, le creux faisant au moins une partie de la cavité 100.

Le corps cylindrique creux 102 possède deux extrémités 102.1 et 102.2. Dans un mode de réalisation non limitatif, les languettes 101 sont situées à une première extrémité 102.1 dudit corps cylindrique 102 et disposées selon un cône c1 sur la périphérie dudit corps cylindrique 102. Elles prennent naissance sur la première extrémité 102.1 dudit corps cylindrique 102. Tel qu'illustré sur les figures 6 à 8, le cône c1 comprend ainsi une base c1.0 dont le pourtour correspond sensiblement au pourtour de la première extrémité 102.1 du corps cylindrique 102 et une extrémité c1.1 opposée à la base c1.0. A partir de cette base c1.0, les languettes 101 convergent vers l'extrémité c1.1 du cône c1. Le diamètre de l'extrémité c1.1 du cône c1 est ainsi plus petit que le diamètre de la base c1.0. Le diamètre de la base c1.0 est sensiblement égal au diamètre du corps cylindrique 102.

Dans un mode de réalisation non limitatif illustré, les languettes 101 sont de même longueur. Ainsi, les languettes 101 possèdent des extrémités distales 101.1 qui sont disposées sur un cercle c1.1 plus ou moins grand selon la position ouverte p2 ou la position fermée p1 de ladite première pièce 10. Le cercle c1.1 forme l'extrémité du cône c1. Les languettes 101 agrippent ainsi le guide de lumière 2 selon le cercle c1.1. Ainsi, lorsque la première pièce 10 est dans la position ouverte p2 (illustrée sur la figure 8), le cercle c1.1 est plus grand que lorsque la première pièce 10 est dans la position fermée p1 (illustrée sur la figure 7).

Dans un autre mode de réalisation non limitatif non illustré, les languettes 101 ne sont pas de même longueur. Ainsi, elles agrippent le guide de lumière 2 à différents endroits qui ne sont pas selon un cercle.

La première pièce 10 comprend une ouverture 10.a délimitée par les languettes 101, en particulier par leurs extrémités distales 101.1, dans laquelle l'extrémité 2.a du guide de lumière 2 peut être insérée.

Dans un mode de réalisation non limitatif, la première pièce 10 comprend en outre des languettes anti-retour 103 (illustrées sur les figures 2 à 6) configurée pour coopérer avec une partie conique 113 de la deuxième pièce 11 (décrite plus loin) de sorte à maintenir la deuxième pièce 11 à l'intérieur de la cavité 100. Les languettes anti-retour 103 prennent naissance sur le corps cylindrique creux 102. Dans un mode de réalisation non limitatif, les languettes anti-retour 103 font saillie à l'intérieur du corps cylindrique 102 de la première pièce 10.

Dans un mode de réalisation non limitatif, la première pièce 10 comprend en outre une collerette 104 sur laquelle peut venir en butée la collerette externe 114 de la deuxième pièce 11 (décrite plus loin).

La deuxième pièce 11 du dispositif de fixation 1 est maintenant décrite ci-après.

Dans un mode de réalisation non limitatif, la deuxième pièce 11 est en plastique.

La deuxième pièce 11 est configurée pour se loger dans la cavité 100 de la première pièce 10. La deuxième pièce 11 est configurée pour faire passer la première pièce 10 dans la position ouverte p2 lorsqu'elle appuie sur la première pièce 10. A cet effet, dans un mode de réalisation non limitatif, la deuxième pièce 11 est configurée pour pouvoir exercer une pression sur les languettes 101 de la première pièce 10 de sorte à positionner la première pièce dans la position ouverte p2.

Tel qu'illustré sur la figure 9, dans un mode de réalisation non limitatif, la deuxième pièce 11 comprend :
- un corps cylindrique creux 112 dans lequel ledit guide de lumière 2 peut être inséré,
- une partie conique 113 configurée pour appuyer sur lesdites languettes 101 de ladite première pièce 10 pour la mettre en position ouverte p2.

Le corps cylindrique creux 112, autrement appelé corps cylindrique 112, comprend deux extrémités 112.1 et 112.2 dont l'une 112.1 se situe côté partie conique 113 et l'autre côté collerette externe 114 (décrite plus loin).

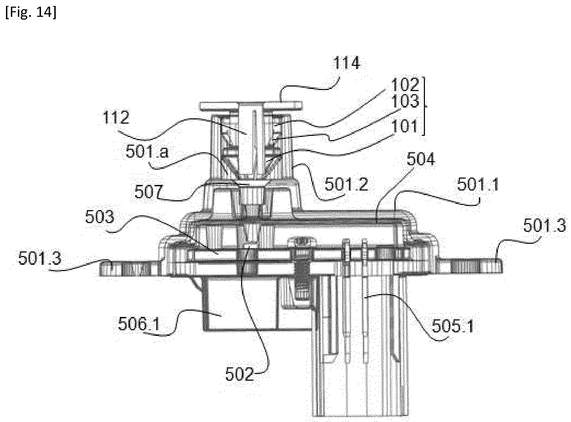

Dans un mode de réalisation non limitatif illustrée sur les figures 2 et 3, le corps cylindrique creux 112 de ladite deuxième pièce 11 est configuré pour dépasser du corps cylindrique 102 de la première pièce 10 lorsque ladite deuxième pièce 11 est logée dans la cavité 100 de ladite première pièce 10. Cela permet à un opérateur de pouvoir exercer une pression externe F1 avec un doigt sur la deuxième pièce 11 et de faire translater la deuxième pièce 11. En particulier, le corps cylindrique creux 112 de ladite deuxième pièce 11 dépasse du côté de l'extrémité 102.2 du corps cylindrique 102 opposé aux languettes 101. On notera que les languettes 101 de la première pièce 10 s'étendent au-delà de la deuxième pièce 11 lorsque la première pièce 10 et la deuxième pièce 11 sont assemblées. Pour la même raison, dans un mode de réalisation non limitatif illustré sur la figure 14, le corps cylindrique creux 112 de ladite deuxième pièce 11 est configuré pour dépasser de la partie cylindrique 501.2 du boîtier 501 du générateur de lumière 50 (décrit plus loin). Cela permet à un opérateur de pouvoir exercer une pression externe F1 avec un doigt sur la deuxième pièce 11 et de faire translater la deuxième pièce 11.

Dans un mode de réalisation non limitatif illustré sur la figure 9, le corps cylindrique 112 de ladite deuxième pièce 11 est composé d'au moins deux parties longitudinales 112.a et 112.b séparées par un espace e0. Cela apporte de la flexibilité à la deuxième pièce 11 lors du montage entre la deuxième pièce 11 et la première pièce 10, notamment lors du passage des languettes anti-retour 103 de la première pièce 10. On autorise ainsi la flexion dudit corps cylindrique 112 au passage des languettes anti-retour 103. Dans un autre mode de réalisation non illustré, le corps cylindrique 112 de ladite deuxième pièce 11 est composé d'un seul bloc.

La partie conique 113 est configurée pour coopérer avec les languettes anti-retour 103 de la première partie 10 de sorte à maintenir la deuxième pièce 11 à l'intérieur de la cavité 100 de la première partie 10. La partie conique 113 prend naissance à l'une des extrémités 112.1 du corps cylindrique 112. Elle forme un cône c2 dont la base c2.0 se situe à l'extrémité 112.1 du corps cylindrique 112 et dont l'extrémité c2.1 forme un cercle dont le diamètre est inférieur à celui de la base c2.0. On notera que le diamètre de l'extrémité c2.1 est supérieur à celui de l'extrémité c1.1 du cône c1 formé par les languettes 101 de la première pièce 10. Cela permet d'appuyer sur les languettes 101. Par ailleurs, le diamètre de la base c2.0 est défini de sorte que la deuxième pièce 11 est guidée dans le corps cylindrique 102 de la première pièce 10. Dans un mode de réalisation non limitatif, la partie conique 113 est une partie renflée, à savoir la base c2.0 est supérieure au diamètre du corps cylindrique 112.

Dans un mode de réalisation non limitatif, la deuxième pièce 11 comprend en outre une collerette externe 114 sur laquelle une pression externe F1, autrement appelée pression F1 ou force F1, peut être exercée. Cela facilite l'appui par l'opérateur sur la deuxième pièce 11. La collerette externe 114 est disposée à l'autre extrémité 112.2 du corps cylindrique creux 112 opposée à la partie conique 113.

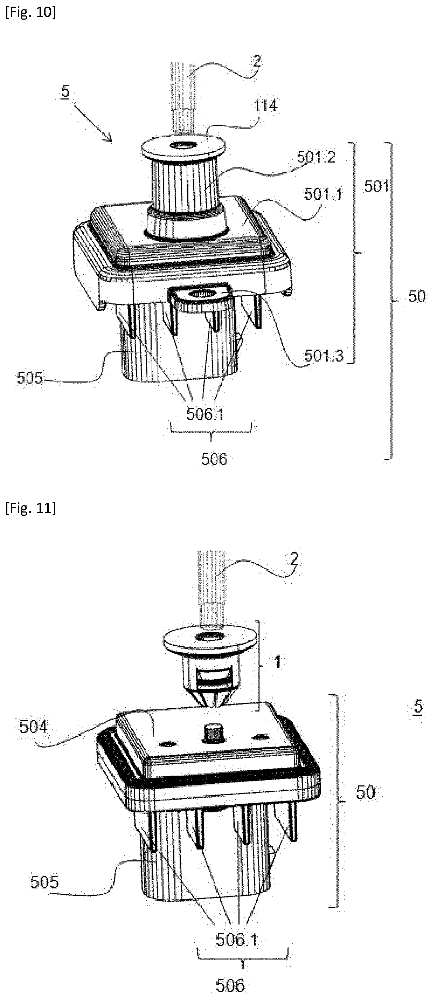

Tel qu'illustré sur les figures 10 à 14, dans un mode de réalisation non limitatif, le dispositif de fixation 1 est intégré dans un module lumineux 5. Dans un mode de réalisation non limitatif, le module lumineux 5 avec le guide de lumière 2 est configuré pour réaliser une fonction d'éclairage et/ou de signalisation ou une fonction d'éclairage intérieur.

Tel qu'illustré sur la figure 10, le module lumineux 5 comprend :
- ledit dispositif de fixation 1 du guide de lumière 2,
- un générateur de lumière 50.

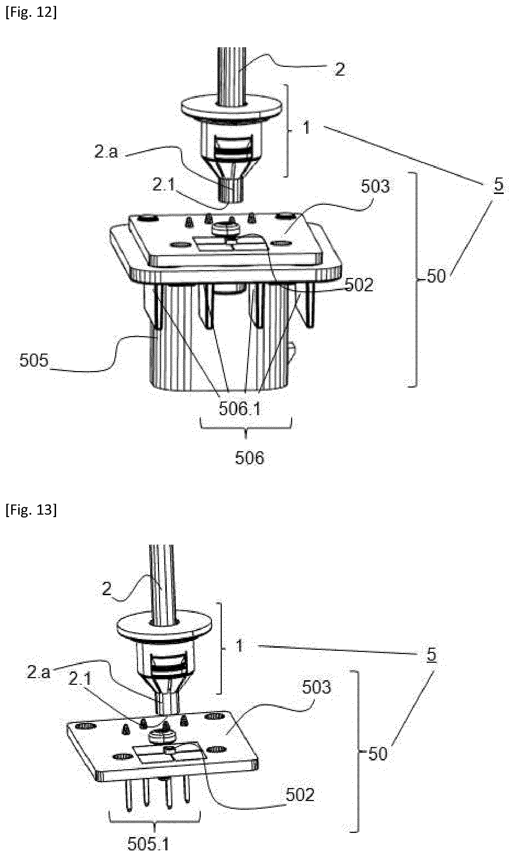

Le générateur de lumière 50 est configuré pour coopérer avec le guide de lumière 2. Sur les figures 10 et 11, le guide de lumière 2 est représenté non fixé par le dispositif de fixation 1. Sur les figures 12 et 13 il est représenté fixé par le dispositif de fixation 1.

Le générateur de lumière 50 comprend un boîtier 501 illustré sur la figure 10 configuré pour accueillir une source lumineuse 502 (illustrée sur les figures 12 à 14). Le boîtier 501 du générateur de lumière 50 est autrement appelé boîtier primaire.

Tel qu'illustré sur la figure 14, le boîtier 501 comprend :
- un couvercle 501.1 configuré pour recouvrir la source lumineuse 502 et son support électronique 503,
- une partie cylindrique 501.2 formant un fût avec une cavité 501.a (illustrée sur la figure 14) configurée pour recevoir l'ensemble du dispositif de fixation 1.

Dans un mode de réalisation non limitatif, le boîtier 501 comprend en outre des pattes de fixation 501.3 (illustrées sur les figures 10 et 14) configurées pour accrocher le module lumineux 5 sur la calandre 30 du véhicule automobile 3.

Dans un mode de réalisation non limitatif, le générateur de lumière 50 comprend en outre un joint d'étanchéité 507 (illustré sur la figure 14). Le joint d'étanchéité 507 est solidaire du boîtier 501. Cela permet d'avoir une étanchéité de l'extrémité 2.a du guide de lumière 2. La première pièce 10 est prise en sandwich entre le joint d'étanchéité 507 et la partie conique 113 de la deuxième pièce 11.

Le générateur de lumière 50 comprend une source lumineuse 502. Dans un mode de réalisation non limitatif, la source lumineuse 502 est une source lumineuse à semi-conducteur. Dans un mode de réalisation non limitatif, ladite source lumineuse à semi-conducteur fait partie d'une diode électroluminescente. Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED). La source lumineuse 502 est disposée sur un support électronique 503 (illustré sur les figures 12 à 14). Dans un mode de réalisation non limitatif, le support électronique 503 est une carte PCBA (« Printed Circuit Board Assembly »). L'ensemble source lumineuse 502 et support électronique 503 sont scellés par un capot 504 illustré sur la figure 11.

Le générateur de lumière 50 est configuré pour coopérer avec le guide de lumière 2. En particulier le guide de lumière 2 permet un découplage de la lumière émise par la source lumineuse 502. Tel qu'illustré sur les figures 12 et 13, l'entrée 2.1 du guide de lumière 2 est ainsi disposée en regard de la source lumineuse 502.

Le générateur de lumière 50 comprend en outre un connecteur électrique 505 (illustré sur les figures 10 à 12) pour connecter la source lumineuse 502 à une alimentation électrique. Le connecteur électrique 505 comprend des pins de connexion électriques 505.1 illustrées sur la figure 13. Dans un mode de réalisation non limitatif, le connecteur 505 est connecté à un dispositif lumineux tel qu'un projecteur ou un feu de signalisation, qui fournit l'alimentation électrique.

Dans un mode de réalisation non limitatif, le générateur de lumière 50 comprend en outre un radiateur 506 configuré pour refroidir la source lumineuse 502 ainsi que son support électronique 503. Dans une variante de réalisation non limitative, le radiateur 506 est formé d'ailettes de refroidissement 506.1 illustrées sur les figures 10 à 12 et 14.

Dans un premier mode de réalisation non limitatif illustré sur la figure 14, la première pièce 10 du dispositif de fixation 1 est indépendante et solidaire du boîtier 501 du générateur de lumière 5. Le dispositif de fixation 1 est inséré dans la cavité 501.a dudit boîtier 501. Elle est fixée au boîtier 501 par soudure, collage, rivetage. Dans un deuxième mode de réalisation non limitatif non illustré, la première pièce 10 est venue de matière avec le boîtier 501 du générateur de lumière 50. Ainsi, dans un exemple non limitatif, une languette 101 sur deux est configurée pour pincer le guide de lumière 2 et une languette 101 sur deux fait la liaison avec le boîtier 501.

Le montage de la deuxième pièce 11 avec la première pièce 10 est maintenant décrit ci-après.

Pour fixer les éléments du dispositif de fixation 1 entre eux, un opérateur va introduire la deuxième pièce 11 à l'intérieur de la cavité 100 de la première pièce 10 et la translater en poussant dessus. En poussant dessus, la partie conique 113 va dépasser les languettes anti-retour 103 de la première pièce 11. La partie conique 113 se rétracte pour pouvoir dépasser les languettes anti-retour 103. Ces dernières vont s'écarter au passage de la partie conique 113 de la deuxième pièce 11 puis se relâcher après qu'elle les ait dépassées ce qui évite à la deuxième pièce 11 de pouvoir être retirée tandis que la partie conique 113 se relâche lorsqu'elle a dépassé les languettes anti-retour 103. La deuxième pièce 11 (notamment son corps cylindrique creux 112) est ainsi maintenue à l'intérieur de la cavité 100 de la première partie 10.

La fixation du guide de lumière 2 est décrite ci-après.

En position dite de repos, le dispositif de fixation 1 ne coopère pas avec le guide de lumière 2. Il n'y a pas de guide de lumière 2 inséré dans le corps cylindrique creux 112 de la deuxième pièce 11. Il n'y a pas de pression externe F1 exercée sur la deuxième pièce 11. La deuxième pièce 11 n'applique pas de force F1 sur les languettes 101. La première pièce 10 est en position fermée p1 : ses languettes 101 sont en position relâchées. A savoir elles sont refermées.

Pour introduire le guide de lumière 2 dans le dispositif de fixation 1, un opérateur effectue les étapes suivantes.

Dans une première étape, l'opérateur positionne son ou ses doigts sur la collerette externe 114 de la deuxième pièce 11 et exerce une pression F1 dessus. A ce moment, la deuxième pièce 11 effectue un premier mouvement de translation qui entraîne que la partie conique 113 de la deuxième pièce 11 appuie sur les languettes 101 de la première pièce 10 pour les écarter et mettre la première pièce 10 en position ouverte p2. Les languettes 101 s'écartent. La deuxième pièce 11 est ainsi assimilable à un bouton poussoir.

Dans une deuxième étape, tout en continuant à appuyer sur la deuxième pièce 11, l'opérateur introduit une extrémité 2.a du guide de lumière 2 dans le corps cylindrique creux 112 de la deuxième pièce 11. L'extrémité 2.a du guide de lumière 2 est ainsi insérée dans ledit corps cylindrique creux 112. L'insertion est effectuée jusqu'à ce que l'extrémité 2.a du guide de lumière 2 dépasse les languettes 101 de la première pièce 10 et que le guide de lumière 2 arrive en butée dans le boîtier 501. Lorsque le guide de lumière 2 arrive en butée dans le boîtier 501, les languettes 101 sont dépassées. L'entrée 2.1 fait ainsi face à la source lumineuse 502 du générateur de lumière 50 du module lumineux 5.

Dans une troisième étape, l'opérateur relâche la pression F1 qu'il exerçait sur la deuxième pièce 11. Il retire ainsi son ou ses doigts de la collerette externe 114. La deuxième pièce 11 effectue un deuxième mouvement de translation inverse du premier mouvement de translation qui entraîne que sa partie conique 113 n'appuie plus sur les languettes 101 de la première pièce 10 et ces dernières se relâchent. Elles ne sont plus écartées. Elles viennent ainsi agripper le guide de lumière 2 à son extrémité 2.a et le bloquent. Le guide de lumière 2 est ainsi piégé dans le dispositif de fixation 1. Il est maintenu en place par le dispositif de fixation 1. L'ensemble guide de lumière 2 et module lumineux 5 qui comprend le dispositif de fixation 1 est ainsi maintenu ensemble. On notera que le guide de lumière 2 est en plastique tandis que les languettes 101 qui l'agrippent peuvent être en métal. Dans ce cas, cela permet d'avoir contact plastique-métal qui renforce le maintien du guide de lumière 2. Si on tire sur le guide de lumière 2 sans appuyer sur la collerette externe 114 de la deuxième pièce 11, le guide de lumière 2 est encore plus coincé par les languettes 101. Ainsi, cela évite que pendant la vie du véhicule automobile 3, le guide de lumière 2 ne se détache lors de vibrations ou de chocs créés lorsque le véhicule automobile 3 est en mouvement.

On notera que l'extrémité 2.a du guide de lumière 2 est accessible à un opérateur. On notera par ailleurs que l'extrémité 2.a est très proche de la source lumineuse 502. Pour rappel, l'extrémité 2.a comprend l'entrée 2.1 du guide de lumière 2. Ainsi, le dispositif de fixation 1 permet de minimiser la distance entre l'entrée 2.1 du guide de lumière 2 et la source lumineuse 502. Cela évite des pertes optiques : on réduit la partie des rayons lumineux émis par la source lumineuse 502 qui ne va pas dans le guide de lumière 2. Par ailleurs, le fait que la deuxième pièce 11 agrippe le guide de lumière 2 permet de réduire les tolérances de positionnement. On obtient ainsi un positionnement précis de l'entrée 2.1 du guide de lumière 2 par rapport à la source lumineuse 501.

Pour remplacer le module lumineux 5, l'opérateur pousse de nouveau sur la deuxième partie 11 du dispositif de fixation 1 pour libérer le guide de lumière 2. Sa partie conique 113 pousse ainsi sur les languettes 101 de la première pièce 10 pour les écarter. Celles-ci ne retiennent plus le guide de lumière 2 qui est ainsi libéré du dispositif de fixation 1 et donc du module lumineux 5. Le module lumineux 5 peut ainsi être détaché du guide de lumière 2, ce dernier restant intégré dans la calandre 30 dans le véhicule automobile 3 notamment inséré dans la glace de sortie 33 dans le mode de réalisation non limitatif pris.

Ainsi, on peut sans difficulté changer le module lumineux 5, à savoir l'ensemble formé par le dispositif de fixation 1 et le générateur de lumière 50, ce dernier comprenant le boîtier 501, la source lumineuse 502, le support électronique 503, le connecteur électrique 505, et le radiateur 506.

On notera que pour accéder au module lumineux 5 et à l'extrémité 2.a du guide de lumière 2, dans des modes de réalisation non limitatif l'opérateur peut:
- ouvrir le capot (non illustré) du véhicule automobile 2 et accéder ainsi directement au module lumineux 5 et à l'extrémité 2.a du guide de lumière 2, ou
- ouvrir une trappe d'accès (non illustrée) dans la calandre 30 ou le ciel de toit pour accéder au module lumineux 5 et à l'extrémité 2.a du guide de lumière 2.

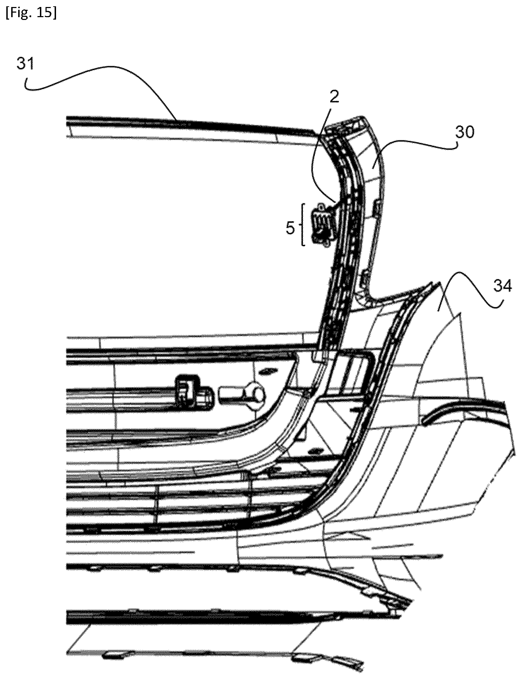

Dans un mode de réalisation non limitatif, le module lumineux 5 est intégré lui-même dans la calandre 30 du véhicule automobile 3 illustré sur les figures 15 à 17 ainsi que le guide de lumière 2. Dans un autre mode de réalisation non limitatif, le module lumineux 5 est intégré dans le ciel de toit dans l'habitacle du véhicule automobile 3.

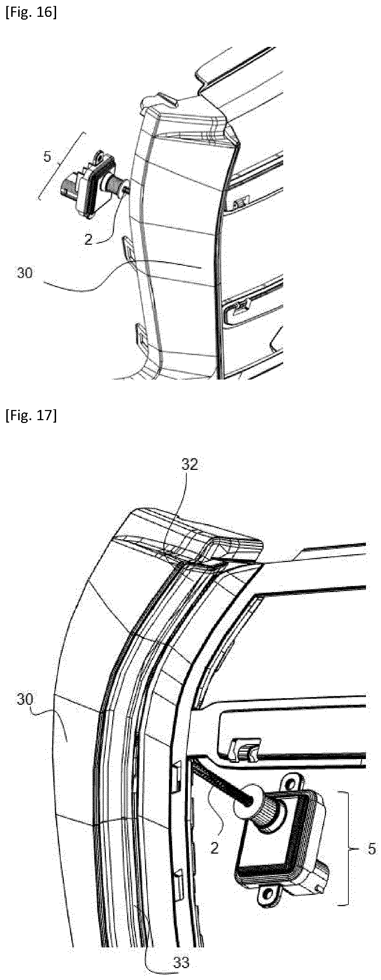

La figure 15 illustre une partie de la calandre 30 en vue arrière. Comme on peut le voir, dans un mode de réalisation non limitatif, la calandre 30 fait partie de la face avant 31 du véhicule automobile 3 dans une variante de réalisation non limitative. On peut également voir une partie du pare-choc 34 du véhicule automobile 3. La figure 16 illustré une autre vue de la calandre 30 qui intègre le module lumineux 5 et le guide de lumière 2.

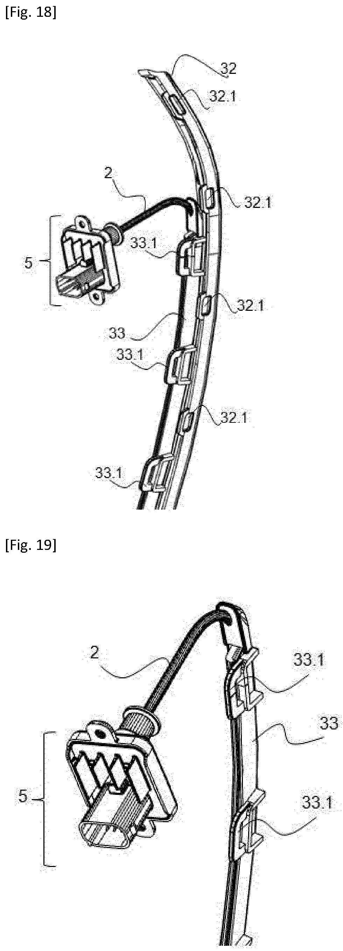

Dans un mode de réalisation non limitatif illustré sur la figure 17 et 18, un jonc chromé 32 fait le tour de la calandre 30. Il s'étend le long de la calandre 30. Tel qu'illustré sur la figure 17, il est disposé entre la calandre 30 et une glace de sortie 33. Tel qu'illustré sur la figure 18, le jonc chromé 32 comprend des clips de fixation 32.1 sur la calandre 30.

Dans un mode de réalisation non limitatif illustré sur la figure 19, la glace de sortie 33 suit également le pourtour de la calandre 30 du véhicule automobile 3. Elle est transparente de sorte à laisser passer la lumière émise par le générateur de lumière 50 et traversant le guide de lumière 2. Dans un mode de réalisation non limitatif, la glace de sortie 33 comprend des clips de fixation 33.1 sur la calandre 30. La glace de sortie 33 est ainsi également fixée sur la calandre 30. La glace de sortie 33 sert de support au guide de lumière 2.

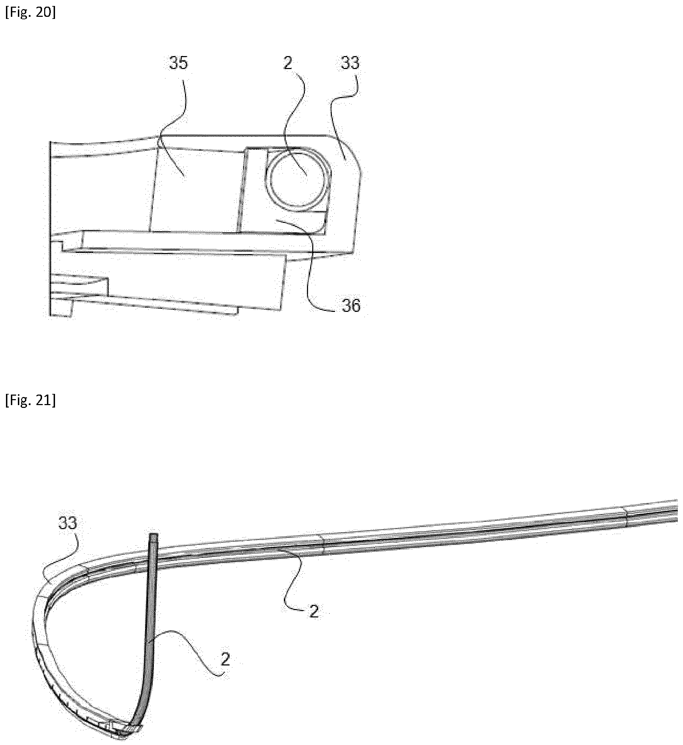

Comme on peut le voir sur la figure 19, le guide de lumière 2 est directement adjacent à la glace de sortie 33. Tel qu'illustré sur la figure 20, dans un mode de réalisation non limitatif, la glace de sortie 33 possède une forme en U qui permet de positionner le guide de lumière 2 à l'intérieur. Le guide de lumière 2 suit ainsi également le pourtour de la calandre 30 comme illustré sur la figure 21. Pour faire tenir le guide de lumière 2 dans la glace de sortie 33, dans un mode de réalisation non limitatif, une résine 35 est utilisée. Elle s'étend le long de la glace de sortie 33. La résine 35 permet également de protéger le guide de lumière 2. On a une bonne étanchéité. Dans un mode de réalisation non limitatif, une pièce de fermeture 36 est utilisée en complément de la résine 35. Elle s'étend le long de la glace de sortie 33 et est disposée directement adjacente au guide de lumière 2. Dans un exemple non limitatif, la pièce de fermeture 36 est de couleur blanche. On notera que dans le cas où la résine 35 est elle-même de couleur blanche, il n'est pas nécessaire d'avoir la pièce de fermeture 36.

Avec cet agencement, l'ensemble module lumineux 5 - guide de lumière 2 - glace de sortie 33 permet de réaliser un éclairage du contour de la calandre 30.

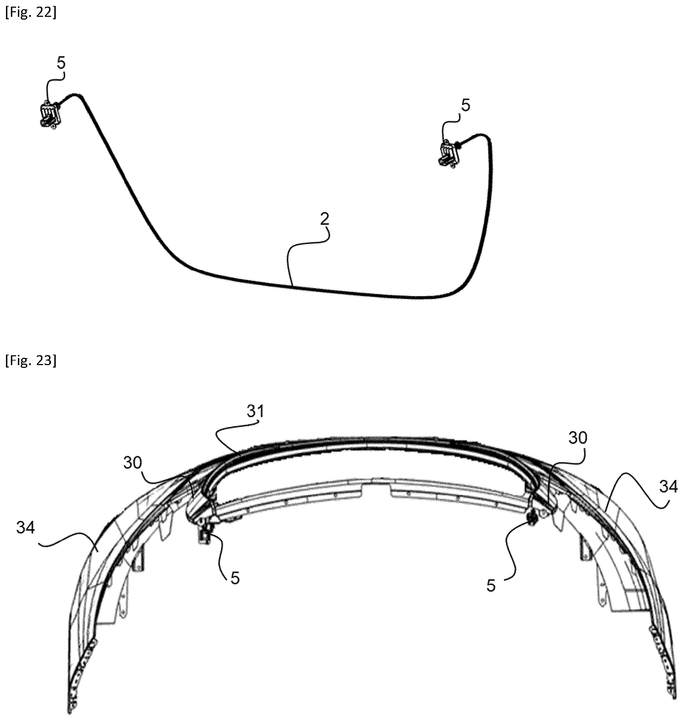

Tel qu'illustré sur la figure 22, dans un mode de réalisation non limitatif, le guide de lumière 2 est configuré pour coopérer avec deux modules lumineux 5, notamment avec chaque générateur de lumière 50 de chacun des deux modules lumineux 5. Ainsi, dans ce cas, le guide de lumière 2 comprend deux extrémités 2.a avec deux entrées 2.1, chaque entrée 2.1 étant disposée en regard d'une source lumineuse 502 de chacun des deux modules lumineux 5 de sorte que la lumière émise par chaque source lumineuse 502 entre respectivement dans une des deux entrées 2.1 du guide de lumière 2. Chaque dispositif de fixation 1 de chaque module lumineux 5 permet d'agripper chaque extrémité 2.a du guide de lumière 2. La figure 23 illustre ainsi une vue de dessus de la face avant 31 et de la calandre 30 du véhicule automobile 3 qui intègre un guide de lumière 2 et deux modules lumineux 5 chacun étant configuré pour coopérer avec deux entrées 2.1 (non illustrés sur la figure 23) du guide de lumière 2. La figure 24 illustre une vue arrière de la face avant 31 avec la calandre 30 de la figure 23 sans le pare-choc 34 du véhicule automobile 2.

Un deuxième mode de réalisation du dispositif de fixation 1, non conforme à l'invention, est décrit ci-après en référence aux figures 25 à 36.

La première pièce 10 du dispositif de fixation 1 est décrite ci-après.

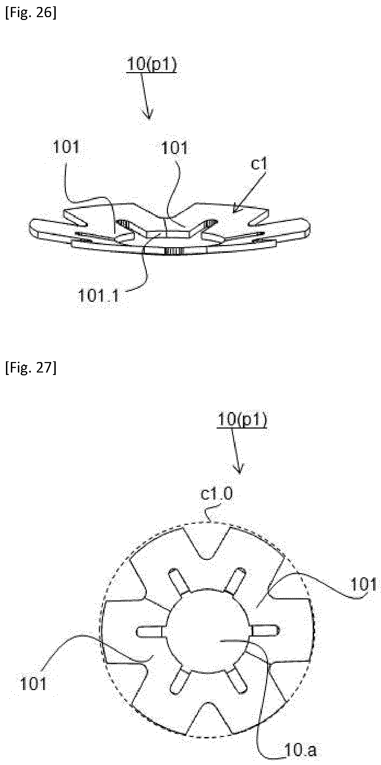

La première pièce 10 est configurée pour prendre :
- une position fermée p1 (illustrée sur la figure 26) dans laquelle elle agrippe le guide de lumière 2 ce qui permet de fixer le guide de lumière 2,
- une position ouverte p2 (illustrée sur la figure 27) dans laquelle elle n'agrippe pas le guide de lumière 2 ce qui permet d'insérer ou de détacher le guide de lumière 2 du dispositif de fixation 1.

Tel qu'illustré sur la figure 25, dans un mode de réalisation non limitatif, la première pièce 10 est configurée pour que la deuxième pièce 11 appuie dessus lorsqu'un opérateur applique une pression F1 dessus.

Dans un mode de réalisation non limitatif illustrées sur les figures 26 et 27, la première pièce 10 comprend des languettes 101 configurées pour que ladite première pièce 10 soit :
- en position fermée p1 lorsqu'elles sont relâchées,
- en position ouverte p2 lorsqu'une pression F1 est exercée sur elles.

Dans un mode de réalisation non limitatif, la première pièce 10 est réalisée dans un matériau métallique ou plastique qui permet d'apporter de la souplesse et de l'élasticité aux languettes 101 et assurer ainsi l'accrochage du guide de lumière 2 par les languettes 101.

La première pièce 10 possède une forme circulaire tel qu'illustré sur les figures 26 à 28 en vue de dessus.

Les languettes 101 sont disposées selon un cône évasé c1. Le cône évasé c1 comprend une base c1.0 et une extrémité c1.1 opposée à la base c1.0. A partir de cette base c1.0, les languettes 101 convergent vers l'extrémité c1.1 du cône c1. Le diamètre de l'extrémité c1.1 du cône c1 est ainsi plus petit que le diamètre de la base c1.0. La base c1.0 forme ainsi le pourtour externe de la première pièce 10. Elle est ainsi autrement appelée pourtour externe c1.0. L'extrémité c1.1 forme quant à lui un pourtour interne. Elle est ainsi autrement appelée pourtour interne c1.1.

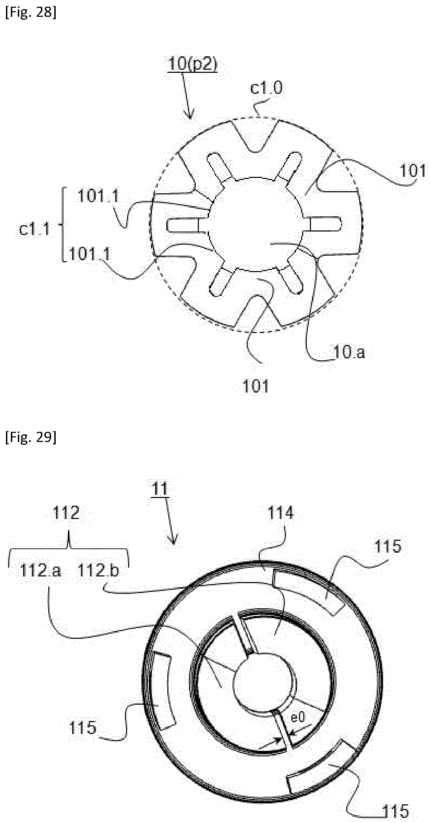

Dans un mode de réalisation non conforme à l'invention et non limitatif illustré, les languettes 101 sont de même longueur. Ainsi, les languettes 101 possèdent des extrémités distales 101.1 qui sont disposées sur un cercle c1.1 plus ou moins grand selon la position ouverte p2 ou la position fermée p1 de ladite première pièce 10. Le cercle c1.1 forme l'extrémité du cône c1. Les languettes 101 agrippent ainsi le guide de lumière 2 selon le cercle c1.1. Ainsi, lorsque la première pièce 10 est dans la position ouverte p2 (illustrée sur la figure 28), le cercle c1.1 est plus grand que lorsque la première pièce 10 est dans la position fermée p1 (illustrée sur la figure 27).

Dans un autre mode de réalisation non limitatif non illustré, les languettes 101 ne sont pas de même longueur. Ainsi, elles agrippent le guide de lumière 2 à différents endroits qui ne sont pas selon un cercle.

La première pièce 10 comprend une ouverture 10.a délimitée par les languettes 101, en particulier par leurs extrémités distales 101.1, dans laquelle l'extrémité 2.a du guide de lumière 2 peut être insérée.

Dans un mode de réalisation non limitatif non illustré, les languettes 101 sont pleines. Dans un autre mode de réalisation non limitatif illustré, les languettes 101 sont ajourées côté du pourtour externe c1.0. Cela permet de supprimer de la matière et d'apporter plus de souplesse.

Comme on peut le voir par rapport au premier mode de réalisation non limitatif, la première pièce 10 ne comprend pas de cône 102 ni de languette anti-retour 103. Elle est plus simple à réaliser et nécessite moins de matière. On réduit ainsi la complexité et le coût de fabrication de la première pièce 10.

La deuxième pièce 11 du dispositif de fixation 1 est maintenant décrite ci-après.

Dans un mode de réalisation non limitatif, la deuxième pièce 11 est en plastique.

La deuxième pièce 11 est configurée pour faire passer la première pièce 10 dans la position ouverte p2 lorsqu'elle appuie sur la première pièce 10. A cet effet, dans un mode de réalisation non limitatif, la deuxième pièce 11 est configurée pour pouvoir exercer une pression sur les languettes 101 de la première pièce 10 de sorte à positionner la première pièce dans la position ouverte p2.

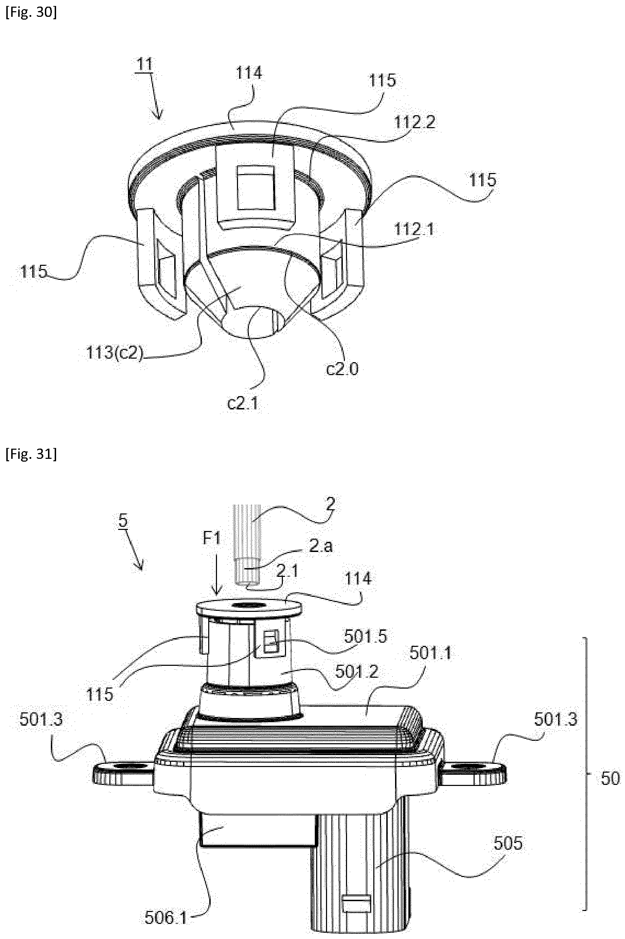

Tel qu'illustré sur les figures 29 et 30, dans un mode de réalisation non limitatif, la deuxième pièce 11 comprend :
- un corps cylindrique creux 112 dans lequel ledit guide de lumière 2 peut être inséré,
- une partie conique 113 configurée pour appuyer sur lesdites languettes 101 de ladite première pièce 10 pour la mettre en position ouverte p2.

Le corps cylindrique creux 112, autrement appelé corps cylindrique 112, comprend deux extrémités 112.1 et 112.2 dont l'une 112.1 se situe côté partie conique 113 et l'autre côté collerette externe 114 (décrite plus loin).

Dans un mode de réalisation non limitatif illustré sur les figures 30 et 31, le corps cylindrique creux 112 de ladite deuxième pièce 11 est configuré pour dépasser de la partie cylindrique 501.2 du boîtier 501 du générateur de lumière 50 (décrit plus loin). Cela permet à un opérateur de pouvoir exercer une pression externe F1 avec un doigt sur la deuxième pièce 11 et de faire translater la deuxième pièce 11.

Dans un mode de réalisation non limitatif illustré, le corps cylindrique 112 de ladite deuxième pièce 11 est composé d'au moins deux parties longitudinales 112.2 séparées par un espace e0. Cela apporte de la flexibilité et de la souplesse à la deuxième pièce 11 lors du montage entre la deuxième pièce 11 et la première pièce 10. Dans un autre mode de réalisation non illustré, le corps cylindrique 112 de ladite deuxième pièce 11 est composé d'un seul bloc.

La deuxième pièce 11 comprend en outre des clips de fixation 115 configurés pour coopérer avec des ergots anti-retour 501.5 du module lumineux 5 (décrit plus loin) de sorte à fixer la première pièce 11 sur le module lumineux 5 et à maintenir la partie conique 113 à l'intérieur d'une cavité 501.a (décrite plus loin) du module lumineux 5.

La partie conique 113 prend naissance à l'une des extrémités 112.1 du corps cylindrique 112. Elle forme un cône c2 dont la base c2.0 se situe à l'extrémité 112.1 du corps cylindrique 112 et dont une extrémité c2.1 forme un cercle dont le diamètre est inférieur à celui de la base c2.0. On notera que le diamètre de l'extrémité c2.1 est supérieur à celui de l'extrémité c1.1 du cône c1 formé par les languettes 101 de la première pièce 10. Cela permet d'appuyer sur les languettes 101.

Dans un mode de réalisation non limitatif, la deuxième pièce 11 comprend en outre une collerette externe 114 disposée sur l'extrémité 112.1 de son corps cylindrique 112 opposée à la partie conique 113 sur laquelle une pression externe F1, autrement appelée pression F1 ou force F1, peut être exercée. Cela facilite l'appui par l'opérateur sur la deuxième pièce 11. La collerette externe 114 est disposée à l'autre extrémité 112.2 du corps cylindrique creux 112 opposée à la partie conique 113.

Tel qu'illustré sur les figures 31 à 34, dans un mode de réalisation non limitatif, le dispositif de fixation 1 est intégré dans un module lumineux 5. Dans un mode de réalisation non limitatif, le module lumineux 5 avec le guide de lumière 2 est configuré pour réaliser une fonction d'éclairage et/ou de signalisation ou une fonction d'éclairage intérieur.

Tel qu'illustré sur la figure 31, le module lumineux 5 comprend :
- ledit dispositif de fixation 1 du guide de lumière 2,
- un générateur de lumière 50.

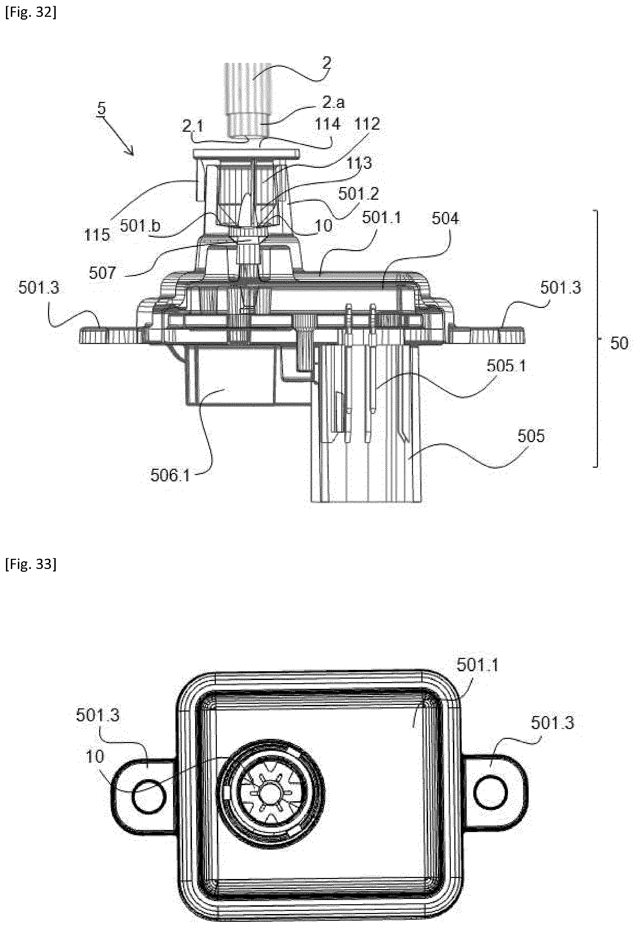

Le générateur de lumière 50 est configuré pour coopérer avec le guide de lumière 2. Sur les figures 31 et 32, le guide de lumière 2 est représenté non fixé par le dispositif de fixation 1.

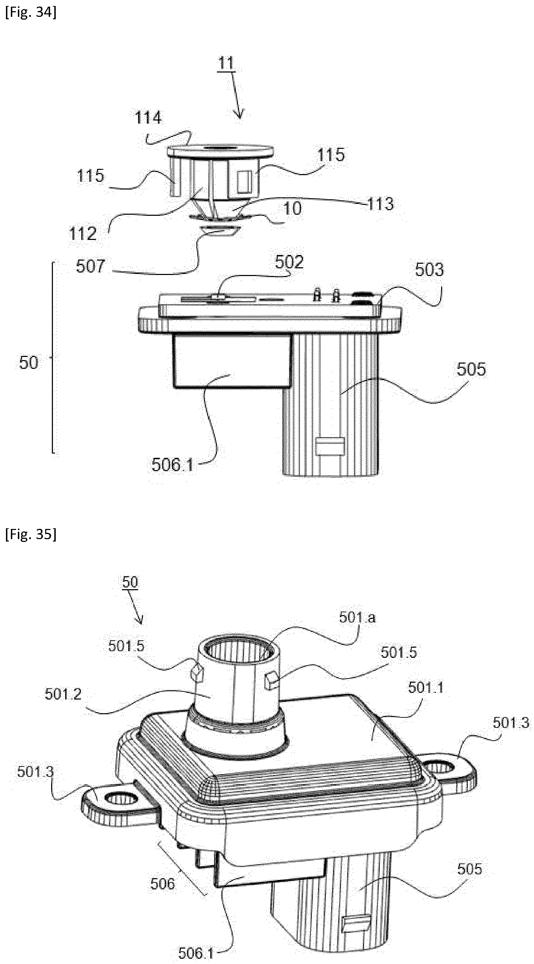

Le générateur de lumière 50 comprend un boîtier 501 illustré sur les figures 31 à 33 et 35, 36 configuré pour accueillir au moins une source lumineuse 502 (illustrée sur la figure 34). Le boîtier 501 du générateur de lumière 50 est autrement appelé boîtier primaire.

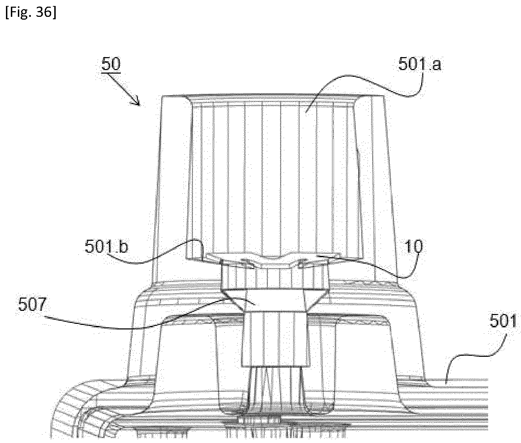

Tel qu'illustré sur les figures 35 et 36, le boîtier 501 comprend :
- un couvercle 501.1 configuré pour recouvrir la source lumineuse 502 et son support électronique 503,
- une partie cylindrique 501.2 formant un fût avec une cavité 501.a (illustrée sur la figure 35) configurée pour recevoir l'ensemble du dispositif de fixation 1.

Dans un mode de réalisation non limitatif, la partie cylindrique 501.2 comprend un rebord 501.b (illustré sur les figures 32 et 36) sur lequel peut reposer la première pièce 10 sur sa périphérie. La première pièce 10 est ainsi posée au fond de la partie cylindrique 501.2 et repose sur sa périphérie sur ledit rebord 501.b.

Dans un mode de réalisation non limitatif, le boîtier 501 comprend en outre des ergots anti-retour 501.5 (illustrés sur les figures 31 et 35) configurés pour coopérer avec les clips de fixation 115 de la deuxième partie 11 décrits précédemment.

Dans un mode de réalisation non limitatif, le générateur de lumière 50 comprend en outre un joint d'étanchéité 507 (illustré sur les figures 32, 34 et 36). Le joint d'étanchéité 507 est solidaire du boîtier 501. Cela permet d'avoir une étanchéité de l'extrémité 2.a du guide de lumière 2. La première pièce 10 est prise en sandwich entre le joint d'étanchéité 507 et la partie conique 113 de la deuxième pièce 11.

Dans un mode de réalisation non limitatif, le boîtier 501 comprend en outre des pattes de fixation 501.3 (illustrées sur les figures 31 à 33, et 35) configurées pour accrocher le module lumineux 5 sur la calandre 30 du véhicule automobile 3.

Le générateur de lumière 50 comprend au moins une source lumineuse 502 illustrée sur la figure 33. L'ensemble de la description qui a été faite dans le premier mode de réalisation non limitatif pour la source lumineuse 502 s'applique ici pour le deuxième mode de réalisation non limitatif, également pour le support électronique 503 et le capot 504.

Le générateur de lumière 50 est configuré pour coopérer avec le guide de lumière 2. En particulier le guide de lumière 2 permet un découplage de la lumière émise par la source lumineuse 502. L'entrée 2.1 du guide de lumière 2 est ainsi disposée en regard de la source lumineuse 502. L'entrée 2.1 du guide de lumière 2 est ainsi disposée en regard de la source lumineuse 502.

Le générateur de lumière 50 comprend en outre un connecteur électrique 505 (illustré sur les figures 31, 32, 34 et 35) pour connecter la source lumineuse 502 à une alimentation électrique. Il comprend des pins de connexion électriques 505.1 illustrées sur la figure 32. Dans un mode de réalisation non limitatif, le connecteur 505 est connecté à un dispositif lumineux tel qu'un projecteur ou un feu de signalisation, qui fournit l'alimentation électrique.

Dans un mode de réalisation non limitatif, le générateur de lumière 50 comprend en outre un radiateur 506 configuré pour refroidir la source lumineuse 502 ainsi que son support électronique 503. Dans une variante de réalisation non limitative, le radiateur 506 est formé d'ailettes de refroidissement 506.1 illustrées sur les figures 31, 32, 34 et 35.

Dans un mode de réalisation non limitatif illustré sur la figure 32, la première pièce 10 du dispositif de fixation 1 est indépendante et non solidaire du boîtier 501 du générateur de lumière 5. Elle est juste posée sur un rebord 501.b de la partie cylindrique 501.2 du boîtier 501.

Le montage du dispositif de fixation 1 dans le module lumineux 5 est maintenant décrit ci-après.

Un opérateur va introduire la première pièce 10 dans la cavité 501.a de la partie cylindrique 501.2 du boîtier 501 du générateur de lumière 50. Elle va reposer sur le rebord 501.b. Puis il introduit la deuxième pièce 11 à l'intérieur de la cavité 501.a et pousse dessus jusqu'à ce que les ergots anti-retour 501.5 du boîtier 501 s'insèrent dans les clips de fixation 115 de la deuxième pièce 11. Le corps cylindrique creux 112 de la deuxième partie 11 est ainsi maintenu à l'intérieur de la cavité 501.a du boîtier 501. La première pièce 10 est ainsi prise en sandwich entre la deuxième pièce 11 notamment sa partie conique 113 et le joint d'étanchéité 507 décrit précédemment.

La fixation du guide de lumière 2 est décrite ci-après.

En position dite de repos, le dispositif de fixation 1 ne coopère pas avec le guide de lumière 2. Il n'y a pas de guide de lumière 2 inséré dans le corps cylindrique creux 112 de la deuxième pièce 11. Il n'y a pas de pression externe F1 exercée sur la deuxième pièce 11. La deuxième pièce 11 n'applique pas de force F1 sur les languettes 101. La première pièce 10 est en position fermée p1 : ses languettes 101 sont en position relâchées. A savoir elles sont refermées.

Pour introduire le guide de lumière 2 dans le dispositif de fixation 1, un opérateur effectue les étapes suivantes.

Dans une première étape, l'opérateur positionne son ou ses doigts sur la collerette externe 114 de la deuxième pièce 11 et exerce une pression F1 dessus. A ce moment, la deuxième pièce 11 effectue un premier mouvement de translation qui entraîne que la partie conique 113 de la deuxième pièce 11 appuie sur les languettes 101 de la première pièce 10 pour les écarter et mettre la première pièce 10 en position ouverte p2. Les languettes 101 s'écartent. La deuxième pièce 11 est ainsi assimilable à un bouton poussoir.

Dans une deuxième étape, tout en continuant à appuyer sur la deuxième pièce 11, l'opérateur introduit une extrémité 2.a du guide de lumière 2 dans le corps cylindrique creux 112 de la deuxième pièce 11. L'extrémité 2.a du guide de lumière 2 est ainsi insérée dans ledit corps cylindrique creux 112. L'insertion est effectuée jusqu'à ce que l'extrémité 2.a du guide de lumière 2 dépasse les languettes 101 de la première pièce 10 et que le guide de lumière 2 arrive en butée dans le boîtier 501. Lorsque le guide de lumière 2 arrive en butée dans le boîtier 501, les languettes 101 sont dépassées. L'entrée 2.1 fait ainsi face à la source lumineuse 502 du générateur de lumière 50 du module lumineux 5.

Dans une troisième étape, l'opérateur relâche la pression F1 qu'il exerçait sur la deuxième pièce 11. Il retire ainsi son ou ses doigts de la collerette externe 114. La deuxième pièce 11 effectue un deuxième mouvement de translation inverse du premier mouvement de translation qui entraîne que sa partie conique 113 n'appuie plus sur les languettes 101 de la première pièce 10 et ces dernières se relâchent. Elles ne sont plus écartées. Elles viennent ainsi agripper le guide de lumière 2 à son extrémité 2.a et le bloquent. Le guide de lumière 2 est ainsi piégé dans le dispositif de fixation 1. Il est maintenu en place par le dispositif de fixation 1. L'ensemble guide de lumière 2 et module lumineux 5 est ainsi maintenu ensemble. On notera que le guide de lumière 2 est en plastique tandis que les languettes 101 qui l'agrippent peuvent être en métal. Dans ce cas, cela permet d'avoir contact plastique-métal qui renforce le maintien du guide de lumière 2. Si on tire sur le guide de lumière 2 sans appuyer sur la collerette 114 de la deuxième pièce 11, le guide de lumière 2 est encore plus coincé par les languettes 101. Ainsi, cela évite que pendant la vie du véhicule automobile 3, le guide de lumière 2 ne se détache lors de vibrations ou de chocs créés lorsque le véhicule automobile 3 est en mouvement.

On notera que l'extrémité 2.a du guide de lumière 2 est accessible à un opérateur. On notera par ailleurs que l'extrémité 2.a est très proche de la source lumineuse 501. Pour rappel, l'extrémité 2.a comprend l'entrée 2.1 du guide de lumière 2. Ainsi, le dispositif de fixation 1 permet de minimiser la distance entre l'entrée 2.1 du guide de lumière 2 et la source lumineuse 501. Cela évite des pertes optiques : on réduit la partie des rayons lumineux émis par la source lumineuse 501 qui ne va pas dans le guide de lumière 2. Par ailleurs, le fait que la deuxième pièce 11 agrippe le guide de lumière 2 permet de réduire les tolérances de positionnement. On obtient ainsi un positionnement précis de l'entrée 2.1 du guide de lumière 2 par rapport à la source lumineuse 501.

Pour remplacer le module lumineux 5, l'opérateur pousse de nouveau sur la deuxième partie 11 du dispositif de fixation 1 pour libérer le guide de lumière 2. Sa partie conique 113 pousse ainsi sur les languettes 101 de la première pièce 10 pour les écarter. Celles-ci ne retiennent plus le guide de lumière 2 qui est ainsi libéré du dispositif de fixation 1 et donc du module lumineux 5. Le module lumineux 5 peut ainsi être détaché du guide de lumière 2, ce dernier restant intégré dans la calandre 30 du véhicule automobile 3, notamment inséré dans la glace de sortie 33 dans le mode de réalisation non limitatif pris.

Ainsi, on peut sans difficulté changer le module lumineux 5, à savoir l'ensemble formé par le dispositif de fixation 1 et le générateur de lumière 50, ce dernier comprenant le boîtier 501, la source lumineuse 502, le support électronique 503, le connecteur électrique 505, et le radiateur 506.

On notera que pour accéder au module lumineux 5 et à l'extrémité 2.a du guide de lumière 2, dans des modes de réalisation non limitatif l'opérateur peut:
- ouvrir le capot (non illustré) du véhicule automobile 2 et accéder ainsi directement au module lumineux 5 et à l'extrémité 2.a du guide de lumière 2, ou
- ouvrir une trappe d'accès (non illustrée) dans la calandre 30 ou le ciel de toit pour accéder au module lumineux 5 et à l'extrémité 2.a du guide de lumière 2.

Dans un mode de réalisation non limitatif, le module lumineux 5 est intégré lui-même dans la calandre 30 du véhicule automobile 3 ainsi que le guide de lumière 2. Les explications données dans le premier mode de réalisation non limitatif en référence aux figures 15 à 24 sur l'intégration dans la calandre 30, sur le jonc chromé 32, sur la glace de sortie 33, sur l'utilisation de deux modules lumineux 5 avec le guide de lumière 2 etc. s'appliquent de la même manière dans ce deuxième mode de réalisation non limitatif.

Bien entendu la description de l'invention n'est pas limitée au premier mode de réalisation décrit ci-dessus et au domaine décrit ci-dessus.

Ainsi, l'invention décrite présente notamment les avantages suivants :
- elle permet d'assurer l'interchangeabilité du module lumineux 5 s'il est défectueux, sans pour autant démonter toute la calandre 30, le jonc chromé 32 et la glace de sortie 33 avec le guide de lumière 2 dans le mode de réalisation non limitatif décrit,
- elle permet une connexion simple d'un guide de lumière 2 avec un module lumineux 5,
- c'est une solution peu encombrante et peu coûteuse contrairement à une solution qui consisterait à utiliser une pièce intermédiaire sur laquelle sont fixées le guide de lumière 2 et le module lumineux 5,
- elle permet un positionnement précis de l'entrée 2.1 du guide de lumière 2 par rapport à la source lumineuse 502 du générateur de lumière 50 du module lumineux 5, contrairement à une solution avec la pièce intermédiaire qui entraînerait de trop grandes tolérances de positionnement,
- c'est une solution qui permet d'éviter les chocs et les vibrations,
- le deuxième mode de réalisation du dispositif de fixation est une solution qui réduit la matière utilisée.

## Revendications

1. Dispositif de fixation (1) d'un guide de lumière (2) pour véhicule (3), ledit dispositif de fixation (1) comprenant :
- une première pièce (10) configurée pour prendre une position fermée (p1) dans laquelle elle agrippe ledit guide de lumière (2), et une position ouverte (p2),
- une deuxième pièce (11) configurée pour positionner la première pièce (10) dans la position fermée (p1) ou dans la position ouverte (p2),
dans lequel ladite première pièce (10) comprend des languettes (101) configurées pour que ladite première pièce (10) soit en position fermée (p1) lorsqu'elles sont relâchées,
dans lequel ladite première pièce (10) est une pièce périphérique avec une cavité (100) dans laquelle vient se loger ladite deuxième pièce (11),
dans lequel ladite première pièce (10) comprend un corps cylindrique creux (102)
**caractérisé en ce que** lesdites languettes (101) sont situées à une première extrémité (102.1) dudit corps cylindrique creux (102) et disposées selon un cône sur la périphérie dudit corps cylindrique creux (102).

2. Dispositif de fixation (1) selon la revendication précédente, dans lequel ladite deuxième pièce (11) est configurée pour pouvoir exercer une force (F1) sur lesdites languettes (101) de sorte à positionner la première pièce (10) dans la position ouverte (p2).

3. Dispositif de fixation (1) selon l'une quelconque des revendications 1 ou 2, dans lequel lesdites languettes (101) possèdent des extrémités distales (101.1) qui sont disposées sur un cercle (c1) plus ou moins grand selon respectivement la position ouverte (p2) ou la position fermée (p1) de ladite première pièce (10).

4. Dispositif de fixation (1) selon l'une quelconque des revendications précédentes, dans lequel ladite deuxième pièce (11) comprend :
- un corps cylindrique creux (112) dans lequel ledit guide de lumière (2) peut être inséré,
- une partie conique (113) configurée pour appuyer sur lesdites languettes (101) de ladite première pièce (10) pour la mettre en position ouverte (p2).

5. Dispositif de fixation (1) selon la revendication précédente, dans ladite deuxième pièce (11) comprend en outre une collerette externe (114) disposée sur une extrémité (112.1) de son corps cylindrique (112) opposée à ladite partie conique (113) sur laquelle une pression externe (F1) peut être exercée.

6. Dispositif de fixation (1) selon l'une quelconque des revendications 4 ou 5, dans lequel ledit corps cylindrique creux (112) de ladite deuxième pièce (11) est composé d'au moins deux parties longitudinales (112.a, 112.b) séparées par un espace (e0).

7. Dispositif de fixation (1) selon la revendication 4, dans lequel ladite première pièce (10) comprend en outre des languettes anti-retour (103) configurées pour coopérer avec ladite partie conique (113) de ladite deuxième pièce (11) de sorte à maintenir ladite deuxième pièce (11) à l'intérieur de la cavité (100).

8. Dispositif de fixation (1) selon la revendication 4, dans lequel ledit corps cylindrique creux (112) de ladite deuxième pièce (11) est configuré pour dépasser du corps cylindrique creux (102) de ladite première pièce (10) lorsque ladite deuxième pièce (11) est logée dans la cavité (100) de ladite première pièce (10).

9. Ensemble (4) pour véhicule (3), ledit ensemble (4) comprenant un guide de lumière (2) et un dispositif de fixation (1) selon l'une quelconque des revendications précédentes, ledit guide de lumière (2) étant fixé par ledit dispositif de fixation (1).

10. Ensemble (4) selon la revendication précédente, dans lequel ledit guide de lumière (2) est un guide de lumière composé de fibres de verre ou de fibres optiques.

11. Module lumineux (5) comprenant :
- un dispositif de fixation (1) d'un guide de lumière (2) pour véhicule (3) selon l'une quelconque des revendications 1 à 8,
- un générateur de lumière (50) configuré pour coopérer avec ledit guide de lumière (2) comprenant un boîtier (501).

12. Module lumineux (5) selon la revendication précédente, dans lequel ladite première pièce (10) est venue de matière avec ledit boîtier (501).

## Patentansprüche

1. Befestigungsvorrichtung (1) eines Lichtleiters (2) für ein Fahrzeug (3), wobei die Befestigungsvorrichtung (1) umfasst:
- ein erstes Teil (10), das dazu konfiguriert ist, eine geschlossene Position (p1), in der es den Lichtleiter (2) greift, und eine offene Position (p2) einzunehmen,
- ein zweites Teil (11), das dazu konfiguriert ist, das erste Teil (10) in der geschlossenen Position (p1) oder in der offenen Position (p2) zu positionieren,
wobei das erste Teil (10) Laschen (101) umfasst, die dazu konfiguriert sind, dass sich das erste Teil (10) in der geschlossenen Position (p1) befindet, wenn sie losgelassen werden,
wobei das erste Teil (10) ein peripheres Teil mit einem Hohlraum (100) ist, in dem das zweite Teil (11) aufgenommen wird,
wobei das erste Teil (10) einen hohlen zylindrischen Körper (102) umfasst,
**dadurch gekennzeichnet, dass** die Laschen (101) an einem ersten Ende (102.1) des hohlen zylindrischen Körpers (102) angeordnet sind und kegelförmig am Umfang des hohlen zylindrischen Körpers (102) angeordnet sind.

2. Befestigungsvorrichtung (1) nach dem vorhergehenden Anspruch, wobei das zweite Teil (11) dazu konfiguriert ist, eine Kraft (F1) auf die Laschen (101) ausüben zu können, um das erste Teil (10) in die offene Position (p2) zu bringen.

3. Befestigungsvorrichtung (1) nach einem der Ansprüche 1 oder 2, wobei die Laschen (101) distale Enden (101.1) aufweisen, die je nach offener Position (p2) oder geschlossener Position (p1) des ersten Teils (10) auf einem mehr oder weniger großen Kreis (c1) angeordnet sind.

4. Befestigungsvorrichtung (1) nach einem der vorhergehenden Ansprüche, wobei das zweite Teil (11) umfasst:
- einen hohlen zylindrischen Körper (112), in den der Lichtleiter (2) eingeführt werden kann,
- einen konischen Abschnitt (113), der dazu konfiguriert ist, auf die Laschen (101) des ersten Teils (10) zu drücken, um es in die offene Position (p2) zu bringen.

5. Befestigungsvorrichtung (1) nach dem vorhergehenden Anspruch, wobei das zweite Teil (11) ferner einen äußeren Flansch (114) umfasst, der an einem Ende (112.1) seines zylindrischen Körpers (112) angeordnet ist, das dem konischen Abschnitt (113) gegenüberliegt und auf den ein äußerer Druck (F1) ausgeübt werden kann.

6. Befestigungsvorrichtung (1) nach einem der Ansprüche 4 oder 5, wobei der hohle zylindrische Körper (112) des zweiten Teils (11) aus mindestens zwei durch einen Zwischenraum (e0) getrennten Längsabschnitten (112.a, 112.b) besteht.

7. Befestigungsvorrichtung (1) nach Anspruch 4, wobei das erste Teil (10) ferner Rücklaufsperrlaschen (103) umfasst, die dazu konfiguriert sind, mit dem konischen Abschnitt (113) des zweiten Teils (11) zusammenzuwirken, um das zweite Teil (11) im Inneren des Hohlraums (100) zu halten.

8. Befestigungsvorrichtung (1) nach Anspruch 4, wobei der hohle zylindrische Körper (112) des zweiten Teils (11) dazu konfiguriert ist, über den hohlen zylindrischen Körper (102) des ersten Teils (10) hinauszuragen, wenn das zweite Teil (11) im Hohlraum (100) des ersten Teils (10) aufgenommen ist.

9. Anordnung (4) für ein Fahrzeug (3), wobei die Anordnung (4) einen Lichtleiter (2) und eine Befestigungsvorrichtung (1) nach einem der vorhergehenden Ansprüche umfasst, wobei der Lichtleiter (2) durch die Befestigungsvorrichtung (1) befestigt ist.

10. Anordnung (4) nach dem vorhergehenden Anspruch, wobei der Lichtleiter (2) ein aus Glasfasern oder Lichtleitfasern bestehender Lichtleiter ist.

11. Lichtmodul (5) umfassend:
- eine Befestigungsvorrichtung (1) eines Lichtleiters (2) für ein Fahrzeug (3) nach einem der Ansprüche 1 bis 8,
- einen Lichtgenerator (50), der dazu konfiguriert ist, mit dem Lichtleiter (2) zusammenzuwirken, und der ein Gehäuse (501) umfasst.

12. Lichtmodul (5) nach dem vorhergehenden Anspruch, wobei das erste Teil (10) einstückig mit dem Gehäuse (501) ausgeführt ist.

## Claims

1. An attachment device (1) for attaching a light guide (2) for a vehicle (3), said attachment device (1) comprising:
- a first part (10) configured to take up a closed position (p1) in which it grips said light guide (2), and an open position (p2),
- a second part (11) configured to position the first part (10) in the closed position (p1) or in the open position (p2)
wherein said first part (10) comprises tabs (101) configured such that said first part (10) is in the closed position (p1) when they are relaxed,
wherein said first part (10) ) is a peripheral part with a cavity (100) in which said second part (11) is housed,
wherein said first part (10) comprises a hollow cylindrical body (102)
**characterized in that** said tabs (101) are located at a first end (102.1) of said hollow cylindrical body (102) and arranged in a cone on the periphery of said hollow cylindrical body (102).

2. The attachment device (1) as claimed in the preceding claim, wherein said second part (11) is configured to be able to exert a force (F1) on said tabs (101) in such a way as to position the first part (10) in the open position (p2).

3. The attachment device (1) as claimed in either of claims 1 and 2, wherein said tabs (101) have distal ends (101.1) which are arranged on a larger or smaller circle (c1) depending on whether said first part (10) is in the open position (p2) or the closed position (p1), respectively.

4. The attachment device (1) as claimed in any one of the preceding claims, wherein said second part (11) comprises:
- a hollow cylindrical body (112) into which said light guide (2) may be inserted,
- a conical portion (113) configured to press on said tabs (101) of said first part (10) to place it in the open position (p2).

5. The attachment device (1) as claimed in the preceding claim, wherein said second part (11) further comprises an external flange (114), arranged on one end (112.1) of its cylindrical body (112) opposite said conical portion (113), on which external pressure (F1) may be exerted.

6. The attachment device (1) as claimed in either of claims 4 or 5, wherein said hollow cylindrical body (112) of said second part (11) is composed of at least two longitudinal portions (112.a, 112.b) separated by a space (e0).

7. The attachment device (1) as claimed in claim 4, wherein said first part (10) further comprises non-return tabs (103) configured to interact with said conical portion (113) of said second part (11) in such a way as to keep said second part (11) inside the cavity (100).

8. The attachment device (1) as claimed in claim 4, wherein said hollow cylindrical body (112) of said second part (11) is configured to protrude from the hollow cylindrical body (102) of said first part (10) when said second part (11) is housed in the cavity (100) of said first part (10).

9. An assembly (4) for a vehicle (3), said assembly (4) comprising a light guide (2) and an attachment device (1) as claimed in any one of the preceding claims, said light guide (2) being attached by said attachment device (1).

10. The assembly (4) as claimed in the preceding claim, wherein said light guide (2) is a light guide composed of glass fibers or optical fibers.

11. A luminous module (5) comprising:
- an attachment device (1) for attaching a light guide (2) for a vehicle (3) as claimed in any one of claims 1 to 8,
- a light generator (50) configured to interact with said light guide (2) comprising a housing (501).

12. The luminous module (5) as claimed in the preceding claim, wherein said first part (10) is formed integrally with said housing (501).
